**Europäisches Patentamt**

**European Patent Office**

**Office européen des brevets**

(11) Publication number : **0 462 093 B1**

# (12) EUROPEAN PATENT SPECIFICATION

(45) Date of publication of patent specification :
02.03.94 Bulletin 94/09

(21) Application number : **91870081.6**

(22) Date of filing : **16.05.91**

(51) Int. Cl.⁵ : **A23G 3/20**, A23G 3/28,
**A23G 3/00**

(54) Method for preparing confectionery products printed with edible ink.

(30) Priority : **23.05.90 BE 9000546**

(43) Date of publication of application :
**18.12.91 Bulletin 91/51**

(45) Publication of the grant of the patent :
**02.03.94 Bulletin 94/09**

(84) Designated Contracting States :
**AT BE CH DE DK ES FR GB GR IT LI LU NL SE**

(56) References cited :
**CH-A- 298 862**
**FR-A- 322 270**
**FR-A- 1 128 885**
**GB-A- 722 851**
**US-A- 3 446 143**
**US-A- 4 168 321**

(56) References cited :
**CHEMICAL ABSTRACTS, vol. 101, no. 19,
November 1984, page 599, column 1,abstract
no. 169406b, Columbus, Ohio, US; & JP-A-59 78
274 (HAMADA SHOKUHIN KOGYO K.K.) 07-
05-1984
CHEMICAL ABSTRACTS, vol. 99, no. 1, July
1983, page 412, column 1, abstract no.4367s,
Columbus, Ohio, US; & JP-A-57 179 263 (TOYO
INK MFG. CO., LTD) 04-11-1982**

(73) Proprietor : "**ALL BUSINESS PROMOTIONS**"
**Verbindingslaan 12
B-2150 Borsbeek (BE)**

(72) Inventor : **Hens, Frank
Frans Beirenslaan 179
B-2150 Borsbeek (BE)**

(74) Representative : **Pieraerts, Jacques et al
Bureau Gevers S.A. rue de Livourne 7 bte 1
B-1050 Bruxelles (BE)**

EP 0 462 093 B1

## Description

This invention relates to a method for preparing confectionery products printed with edible ink, in particular printed chocolate.

There are known different techniques for printing confectionery products which can be divided up into two groups, i.e. direct and indirect printing techniques. According to the indirect printing techniques, the ink is applied according to a certain pattern to an inner wall of a mould for preparing the confectionery product. When demoulding, this ink sticks to the confectionery product.

A method for indirectly printing confectionery products is for example disclosed in CH-A-298862. In the method described in this patent publication, a flat plastic foil is first printed. Then, a mould for preparing confectionery products having an open bottom is placed onto this foil in such a manner that the bottom of this mould is composed of the printed foil. Also in a further method for indirectly printing confectionery products, disclosed in LU-A-66 297, a flat foil is first printed. This printed foil is then sucked into and thermoformed in a mould so that this foil forms the inner wall of the mould. So, in this way, confectionery products having all kinds of printed surfaces can be prepared. A drawback of this known method is, however, that it requires always a foil which can be printed in a plane position by means of for example screen printing techniques.

A direct printing technique for printing confectionery products is for example disclosed in GB-A-722 851. In the method described in this patent publication, use is made of a plane stamp, the under-surface of which bears a replica of the pattern to be printed on the surface of a biscuit. In order to print a biscuit, the stamp is brought into a ink-reservoir and is then pressed directly onto the biscuit. GB-A-722 851 teaches further that the surface of the stamp may be made flexible to compensate for possible unevennesses in the surface of the biscuits.

A drawback of this know method is that the used stamp is only suitable to print on flat surfaces. Moreover, each stamp is only suited to print one kind of design so that printing a new design requires always making a new stamp.

An object of the invention is to propose a method which allows to print confectionery products of all kinds of shapes either directly or indirectly without having to use necessarily in the latter case a foil to apply the ink according to a certain pattern in the mould for preparing the confectionery products.

To this end, said ink is applied according to a predetermined pattern on a cliché, a soft elastic pad having a printing surface which is substantially nonabsorbent for said ink, is pressed over the ink applied to this cliché, said pad is removed from the cliché and the confectionery product is printed either directly or indirectly by means of this pad.

An important advantage of the use of a soft elastic pad is that it allows to print all kinds of surfaces having a different relief. By means of this pad, the ink can thus be applied either directly onto the confectionery products or first onto the inner surface of a mould for preparing the confectionery products. In order to change the design to be printed, only the cliché has to be changed. Indeed, the elastic pad adapts itself to the surface to be printed.

In a preferred embodiment of the method according to the invention, use is made of a pad having a smooth printing surface and of a cliché which is etched according to said predetermined pattern. Compared to preparing a new stamp, etching of such a cliché is a very simple process. Moreover, the use of such a cliché in combination with a pad allows to print a pattern of fine lines. Further, the ink can be applied quickly and simply onto an etched cliché for example by means of a squeegee.

In a further preferred embodiment of the method according to the invention, use is made of a pad of such a shape that when printing on a surface, the surface of contact between the pad and the surface to be printed on increases gradually as the pad is pressed in further. The printing surface of the pad thus not only adjusts itself to the surface to be printed but the printing surface of this pad unrolls itself as it were over the surface to be printed. In this way it is prevented that the pad would slide along the surface to be printed so that no sharply defined pattern would be printed.

In the method according to the invention, use is made of an edible ink which contains at least a solvent, a suspended pigment, a sugar and a surfactant. It has been found experimentally that such an edible ink allows to print confectionery products such as chocolate either directly or indirectly via the inner wall of a mould for preparing the confectionery product, by means of said pad. It was also found that the suspended pigment in this ink provides for a high covering degree which is essential since the printed ink layer has only a thickness of 10 to 50 $\mu$.

In a suitable embodiment of the method according to the invention use is made of an edible ink which contains 40 to 60 % by weight suspended pigment.

In a preferred embodiment of the method according to the invention, use is made of an edible ink which contains at least one pigment from the group of calcium carbonate, titanium dioxide, iron oxide, iron hydroxide, aluminium, silver and gold and which contains preferably as suspended pigment mainly titanium dioxide. From these pigments, titanium dioxide provides the highest covering degree.

In order to increase the adhesion of the ink to the confectionery product to be printed, use is made in a suitable embodiment of the method according to the invention of an edible ink which contains a lipophilic substance and an emulsifier. Especially when using rigid moulds, a better adhesion of the ink to the confectionery product constitutes an important advantage since, in case of a weak adhesion, these moulds should have to be cleaned each time. The emulsifier allows to emulsify the lipophilic substance homogeneously in the solvent. The emulsifier and the surfactant in the ink may possibly be composed of the same substance, for example by a polysorbate. The latter shows a surfactant activity and is at the same time an emulsifier for lipophilic substances such as cacao butter.

Other particularities and advantages of the method according to the invention will become apparent from the following description of a method for preparing confectionery products printed with an edible ink according to the invention. This description is only given by way of example and does not limit the scope of the invention. The reference numerals relate to the annexed drawings wherein :

Figure 1 shows a diagram of a method according to the invention wherein the confectionery product is printed directly, and

Figure 2 shows a diagram of a method according to the invention wherein the confectionery product is printed indirectly via a mould for preparing this confectionery product.

In both of these figures, the same reference numerals relate to the same or analogous elements.

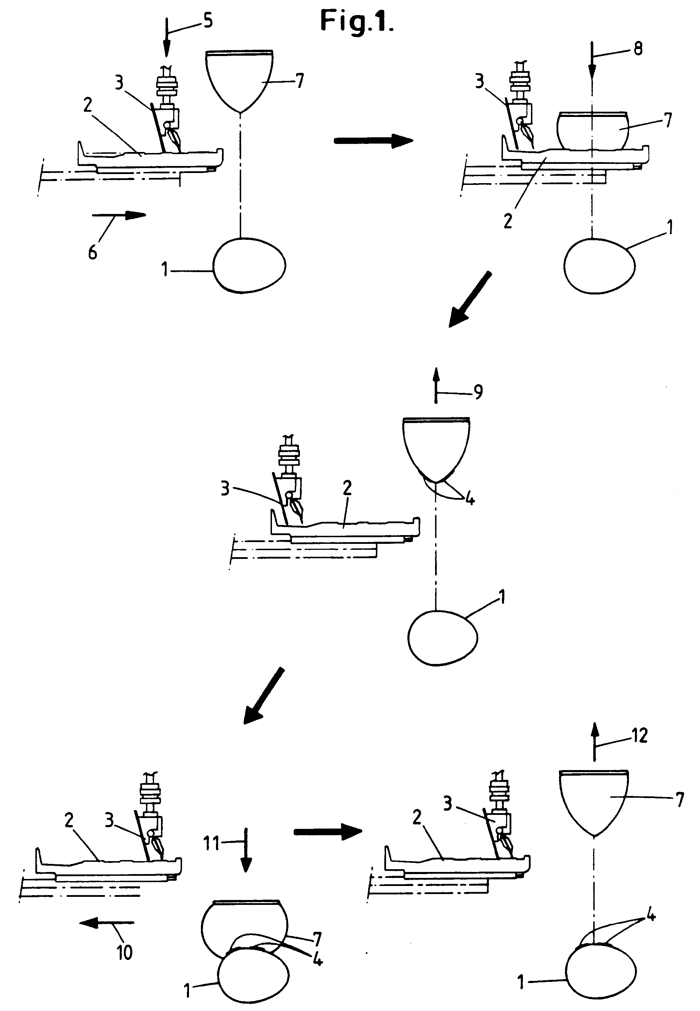

Figure 1 shows schematically the successive steps of a method according to the invention wherein the confectionery product 1 is printed directly. In this first embodiment, use is made of a confectionery product 1, for exemple chocolate confectionery or marzipan, the surface of which to be printed does not necessarily has to be flat but may possibly be uneven, sunken, concave or convex as in figure 1.

In a first step, ink is applied according to a predetermined pattern onto a cliché 2. In the method shown in figure 1, use is made hereto of a substantially flat, according to this predetermined pattern etched cliché 2 to which the ink 4 is applied by means of a squeegee 3 known per se. To this end, the squeegee 3 is lowered previously according to arrow 5 and the cliché 2 is displaced horizontally according to arrow 6 under this squeegee 3. Due to this displacement, the inked cliché 2 is positioned under a soft elastic pad 7, for example a full silicone pad having a Shore A hardness comprised between 18 and 28. This pad 7 has, in contrast to the known stamps, a smooth printing surface.

In a second step, the pad 7 is pressed upon the inked cliché according to arrow 8.

Then, in a third step, the pad 7 is raised back again according to arrow 9, the ink 4 applied according to the predetermined pattern to the cliché 2 adhering to the pad. It will be clear that preferably as much as possible of the ink 4 applied to the cliché 2 remains adhered in this step to the pad 7 and that the latter is a.o. dependent on the used ink.

In a fourth step, the cliché 2 is displaced back aside according to arrow 10 and the elastic pad 7 is pressed onto the confectionary product 1 to be printed according arrow 11. As it appears clearly from figure 1, pad 7 adapts itself in this step completely to the confectionery product 1 to be printed, in this case an Easter egg. Due to the softness of the pad 7, there is no risk on damages when printing this Easter egg 1.

In a fifth step, pad 7 is brought back according to arrow 12 to its initial position. In the same way as in the third step, it will here be clear that preferably substantially all the ink 4 transferred by pad 7 adheres to the confectionery product 1. Thereupon, the pad 7 may possibly be cleaned.

It has further to be noted that the figures are schematical, which applies especially for the ink 4 shown therein, the thickness of which is proportionally too big for clarity's sake. Indeed, in the hereabove described pad printing technique, an ink layer having on average only a thickness of about 10 to 50 μ is applied to the confectionery product.

In the hereabove described method, use is made of a pad 7 of such a shape that when printing on the confectionery product 1, the surface of contact between the pad 7 and this confectionery product 1 increases gradually as the pad 7 is pressed in further. A pad 7 having a convex printing surface is appropriate thereto. The pad 7 shown in the figures has more particularly the shape of a convex cone. This convex cone 7 is pressed first with its point against the confectionery product 1. When pressing the pad 7 further in, the printing surface of this pad 7 is pressed gradually further against the confectionery product 1. In this way, the printing surface of the pad 7 unrolls, as it were, over the confectionery product 1 so that there is no risk on sliding of the printing surface of the pad 7 along the the confectionery product 1. However, this would be the case when use is made of a stamp, the printing surface of which is complementary to the shape of the convex confectionery product 1. A small deviation of the correct position of such a stamp with respect to the confectionery product, would already involve a sliding of the stamp with respect to the confectionery product when printing the latter. In contrast to a stamp having a flexible printing surface, a pad does not only adapts itself to irregularities in the surface to be printed but also to different relief shapes of the surface to be printed.

It will be clear that the pad 7 may still have other suitable shapes. For printing the convex confectionery product 1 shown in figure 1, use might also for example be made of a spherical pad 7.

Further it will be clear that all kinds of confectionery products, such as chocolate truffles, biscuits, and similar products can be printed.

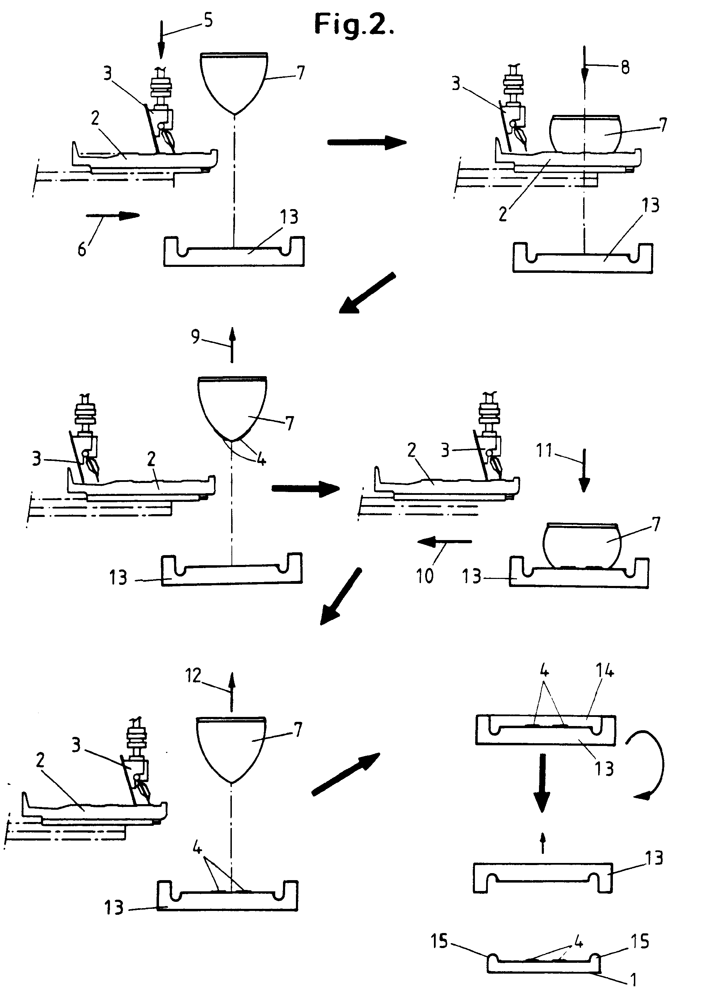

The same pad 7 as described hereinabove can also be used in a method according to the invention wherein the confectionery product 1 is not directly printed but instead indirectly by printing the inner wall of a mould 13 for preparing this confectionery product 1 by means of this pad 7. This indirect printing technique is schematically shown in figure 2.

The first steps of this method represented in figure 2 are the same as those of the hereabove described method shown in figure 1, the difference being however that the pad 7 is pressed into a mould 13 instead of onto the confectionery product 1. After printing the mould 13, a nutritive substance 14, for example tempered molten chocolate, for preparing the confectionery product 1, is poured or dosed in another way herein. Then, the chocolate is cooled down so that it solidifies and shrinks at the same time so that it is released and can be removed afterwards easily from the mould 13. During this demoulding, the ink 4 applied to the mould 13 remains stuck to the chocolate.

The used pad of said printing technique offers also in this second embodiment the advantage that it allows to print in the mould 13 on an either or not flat inner wall. Hence, this printing technique allows to print confectionery products 1 of all kinds of shapes, for example with a raised edge 15 as in figure 2. At the same time, it is possible to manufacture large numbers of decorated confectionery products since this is realized by means of rigid macrolon moulds. The used printing unit can be mounted relatively simply on an existing production line.

The hereabove described printing technique can also be applied for previously thermoformed moulds, the so-called "blisters". The use of these "blisters" offers the advantage that there can be simply moved onto confectionery products, for example chocolate truffles, of another shape. When the hereabove described pad printing technique is used, neither the pad nor the cliché are to be changed when moving onto a different shape unless also the design to be printed has to be changed. In the latter case, only the cliché has to be replaced.

The hereabove described printing technique requires a printing ink 4 which is in the first place edible and which is transferred, during the successive printing steps, from the cliché to the pad and deposited thereupon either directly or indirectly via the mould onto the confectionery product 1.

According to the invention, use is made of an edible ink which contains at least a solvent, a suspended pigment, a sugar and a surfactant.

The solvent is for example water or ethanol or a mixture of both. Preferably, water is used which has the advantage of being cheap and of being easily processable. An important property of the ink is that it has to be relatively quick drying and that it has to be possible to control the drying time by means of accelerators and retarders. When using water as solvent, the drying process may be accelerated by adding ethanol or by using higher temperatures, for example between 20 and 30°C. The surfactant present in the ink is for example an accelerator. In case the ink dries too quickly, for example already on the pad 7, which is called crusting, wetting agents such as sorbitol which prevent dehydration can then be added.

The pigment suspended in the solvent has to present a high covering degree since, compared to the known screen printing techniques, only a thin ink layer of about 10 to 50 $\mu$ is applied by means of the hereabove described pad offset techniques. Suitable pigments are the pigments E170 to E175 included. Those are respectively : calcium carbonate, titanium dioxide, iron oxides and iron hydroxides, aluminium, silver and gold. Preference is given to the on chocolate strongly contrasting and well covering pigment titanium dioxide E171, possibly mixed with calcium carbonate E170 depending on the thickness of the ink layer.

Besides the pigments, dyes, for example E100 to E170, may also be dissolved in the solvent in case other colors are desired.

The surfactant in the ink is essential to obtain a uniform thin ink layer. It reduces the surface tension of the ink and prevents thus that the extremely thin aqueous ink layer tears open during the transfer to the object to be printed. Consequently, the surfactant allows the deposition of the ink. It was found that especially polysorbates and in particular polyoxyethylene (20) sorbitan monostearate or briefly Polysorbate 60 are effective as surfactant. These polysorbates accelerate also the drying process of the ink and hence also the production process.

The sugar, for example sucrose, glucose or a combination of both, present in the ink, is an adhesive which provides for a better adhesion of the ink to the confectionery product. Preference is given to sucrose which is well soluble in water and which has a high sweetening activity so that for example the bitter taste of the polysorbate is covered up. Depending on the application of the ink, glucose may also be added. Compared to sucrose, glucose is a stronger adhesive since it adsorbes better onto composite glycerides such as cacao butter.

4

However, glucose is also a stronger binding agent than sucrose. Due to these binding properties, the ink becomes more viscous and hence less easy to process so that the glucose content in the ink is limited.

In order to improve the adhesion of the ink onto the confectionery product, additional adhesives can further be added to the ink. In a preferred embodiment of the invention use is made hereto of a lipophilic substance. Different fatty acids, fatty acid mixtures and composite glycerides are appropriate as lipophilic substance.

Preference is given to cacao butter which is a composite glyceride consisting mainly of oleic acid, palmitic acid and stearic acid. Cacao butter can be obtained and processed easily. The cacao butter provides a.o., first, for a better adhesion of the ink to the chocolate in the direct printing process and, secondly, for a better transfer of the ink from the fat-repellent mould to the chocolate object, due to its better adhesion to chocolate. The latter property is especially important for rigid, for example macrolon moulds. Indeed, for mass production, it has to be possible to use these moulds several successive times without having to clean them. This implies that the ink which is applied into the mould is transferred completely to the confectionery product moulded in this mould. By using an additional adhesive, such as cacao butter when preparing chocolate, this was found to be feasible. It is also possible to arrange previously a foil into the rigid mould so that the confectionery product can be removed more easily from the rigid mould and no remnants remain in this mould after demoulding.

Since said lipophilic substance is not soluble in water, an emulsifier is added to emulsify the lipophilic substance into the water. As an emulsifier, use can be made of mono- and diglycerides known per se. However, in the method according to the invention preference is given to the polysorbates mentioned hereinabove already as surfactants, and more particularly to polyoxyethylene (20) sorbitan monostearate or briefly Polysorbate 60.

Polysaccharides such as pectin or starch can also be added to the ink so that the cristallisation of the sugar slows down and the emulsion is further stabilized.

It will be clear that depending on the use of the ink, the contents of the hereabove described components can be varied within certain limits, taking into account the properties they provide to the ink.

Depending on the use, the water content of the ink can vary from 10 to 22 % by weight.

It was found that the content of titanium dioxide required to obtain a sufficient covering degree, is dependent on the thickness of the applied ink layer and is preferably comprised between 40 and 60 % by weight.

The amount of surfactant, in particular polysorbate, in the ink can vary between 3 and 20 % by weight. This amount is a.o. dependent on the water content, with a higher water content requiring a bigger amount of polysorbates which prevent, due to their reducing activity on the surface tension, the ink film from tearing open. When the ink contains a lipophilic substance, the amount of polysorbates is also depending hereon since a sufficient amount of polysorbates has to be present to emulsify this lipophilic substance.

The % by weight of lipophilic substance, for example cacao butter, is mainly determined in view of the required adhesive properties and can vary between 0 and 20 % by weight.

The edible ink according to the invention contains always a sugar so that it has a good taste and at the same time already good adhesive properties. Depending on the desired taste and therefore a.o. on the content of bitter polysorbates, a sucrose content from 15 to 30 % by weight was found to be effective.

Table 1 shows a preferred composition of an ink which was found experimentally to be appropriated to be applied onto chocolate with the hereabove described pad offset technique.

Table 1 : Ink composition

| Component | Content in % by weight |
|---|---|
| Water | 16 |
| Titanium dioxide | 50 |
| Polysorbate 60 | 5 |
| Sucrose | 25 |
| Cacao butter | 4 |

Even when the cacao butter is omitted, the ink is still appropriate especially for direct printing or for use with disposable moulds (blisters).

For preparing an ink according to a preferred embodiment of the invention, an aqueous sugar solution is first prepared by dissolving the sugar in hot, non-boiling water. Afterwards, a finely grinded pigment is suspended in this solution. In order to make the ink as flowing as possible, all pigment particles are mixed very intimately through this solution. This very intimate mixing is carried out, in a first phase, in a mixing and sieve installation. Thereupon, liquid emulsifier and liquid cacao butter or another lipophilic substance are mixed through the suspension which is still hot. Due to the addition of cacao butter, the suspension becomes still finer. Every small solid particle is coated by a fine small layer of cacao butter. The emulsification of the cacao butter in the pigment suspension is carried out in a homogenizer to mix the whole still finer and more intimately. This assures a good physical strength of the matrix as the ink dries. Finally, the ink is allowed to cool down at room temperature and can then be used as such.

It will be clear that the invention is in no way limited to the hereabove described embodiments and that the latter can be modified in many ways without leaving the scope of the present patent application.

In this way, it is clear that the method according to the invention can also be used for printing flat surfaces and that the confectionery products to be printed are not limited to chocolate but may possibly be prepared from marzepan and the like. The composition of the ink has to be adapted then to the properties of the confectionary product.

## Claims

1. A method for preparing confectionery products (1), in particular chocolate, printed with edible ink (4), characterized in that said ink (4) is applied according to a predetermined pattern on a cliché (2), a soft elastic pad (7) having a printing surface which is substantially nonabsorbent for said ink, is pressed over the ink (4) applied to this cliché (2), said pad (7) is removed from the cliché (2) and the confectionery product (1) is printed either directly or indirectly by means of this pad (7).

2. A method acccording to claim 1, characterized in that use is made of a pad (7) having a smooth printing surface and of a cliché (2) which is etched according to said predetermined pattern.

3. A method according to claim 1 or 2, characterized in that use is made of a pad (7) of such a shape that when printing on a surface ,the surface of contact between the pad (7) and the surface to be printed on increases gradually as the pad (7) is pressed in further.

4. A method according to anyone of the claims 1 to 3, characterized in that use is made of a pad (7), preferably a silicone pad, having a Shore A hardness comprised between 18 and 28.

5. A method according to anyone of the claims 1 to 4, characterized in that use is made of an edible ink which contains at least a solvent, a suspended pigment, a sugar and a surfactant.

6. A method according to claim 5, characterized in that use is made of an edible ink containing 40 to 60 % by weight suspended pigment.

7. A method according to claim 5 or 6, characterized in that use is made of an edible ink which contains at least one pigment from the group of calcium carbonate, titanium dioxide, iron oxide, iron hydroxide, aluminium, silver and gold and which contains preferably as suspended pigment mainly titanium dioxide.

8. A method according to anyone of the claims 5 to 7, characterized in that use is made of an edible ink further containing a lipophilic substance, preferably cacao butter, and an emulsifier.

9. A method according to anyone of the claims 5 to 8, characterized in that use is made of an edible ink containing a polysorbate, preferably polyoxyethylene (20) sorbitan monostearate.

## Patentansprüche

1. Verfahren zur Herstellung von Süßwarenerzeugnissen (1), insbesonders Schokolade, die mit eßbarer Druckfarbe (4) bedruckt sind, **dadurch gekennzeichnet,** daß die Druckfarbe (4) entsprechend einem vorgegebenen Muster auf einen Druckstock (2) aufgetragen wird, ein weiches, elastisches Kissen (7) mit einer Druckfläche, die im wesentlichen die Druckfarbe nicht absorbiert, auf die auf diesen Druckstock (2) aufgetragene Druckfarbe (4) aufgedrückt wird, das Kissen (7) von dem Druckstock (2) entfernt wird und das Süßwarenerzeugnis (1) entweder direkt oder indirekt mittels dieses Kissens (7) bedruckt wird.

2. Verfahren nach Anspruch 1, **dadurch gekennzeichnet,** daß ein Kissen (7) mit einer glatten Druckfläche und ein Druckstock (2) verwendet werden, der dem vorgegebenen Muster entsprechend geätzt ist.

3. Verfahren nach Anspruch 1 oder 2, **dadurch gekennzeichnet,** daß ein Kissen (7) mit einer Form verwendet wird, bei der, wenn eine Fläche bedruckt wird, die Kontaktfläche zwischen dem Kissen (7) und der zu bedruckenden Fläche allmählich zunimmt, wenn das Kissen (7) weiter eingedrückt wird.

4. Verfahren nach einem der Ansprüche 1 bis 3, **dadurch gekennzeichnet,** daß ein Kissen (7) vorzugsweise ein Silikonkissen, mit einer A-Shorehärte zwischen 18 und 28 verwendet wird.

5. Verfahren nach einem der Ansprüche 1 bis 4, **dadurch gekennzeichnet,** daß eine eßbare Druckfarbe verwendet wird, die wenigstens ein Lösungsmittel, ein suspendiertes Pigment, einen Zucker und einen oberflächenaktiven Stoff enthält.

6. Verfahren nach Anspruch 5, **dadurch gekennzeichnet,** daß eine eßbare Druckfarbe verwendet wird, die 40 bis 60 Masseprozent suspendiertes Pigment enthält.

7. Verfahren nach Anspruch 5 oder 6, **dadurch gekennzeichnet,** daß eine eßbare Druckfarbe verwendet wird, die wenigstens ein Pigment aus der aus Calciumcarbonat, Titaniumdioxid, Eisenoxid, Eisenhydroxid, Aluminium, Silber und Gold bestehenden Gruppe enthält, und die als suspendiertes Pigment vorzugsweise hauptsächlich Titaniumdioxid enthält.

8. Verfahren nach einem der Ansprüche 5 bis 7, **dadurch gekennzeichnet,** daß eine eßbare Druckfarbe verwendet wird, die des weiteren eine lipophile Substanz, vorzugsweise Kakaobutter, sowie einen Emulgator enthält.

9. Verfahren nach einem der Ansprüche 5 bis 8, **dadurch gekennzeichnet,** daß eine eßbare Druckfarbe verwendet wird, die ein Polysorbat, vorzugsweise Polyoxyethylen-(20)-Sorbitanmonostearat, enthält.


## Revendications

1. Procédé de préparation de produits de confiserie (1), en particulier de chocolat, imprimés à l'aide d'encre comestible (4), caractérisé en ce que l'encre (4) est appliquée suivant un dessin prédéterminé sur un cliché (2), un tampon élastique mou (7) comportant une surface d'impression qui est essentiellement non absorbante pour ladite encre, est pressé sur l'encre (4) appliquée à ce cliché (2), ledit tampon (7) est séparé du cliché (2) et le produit de confiserie (1) est imprimé soit directement soit indirectement au moyen de ce tampon (7).

2. Procédé suivant la revendication 1, caractérisé en ce que utilisation est faite d'un tampon (7) comportant une surface d'impression lisse et d'un cliché (2) qui est attaqué suivant le dessin prédéterminé susdit.

3. Procédé suivant l'une ou l'autre des revendications 1 et 2, caractérisé en ce que utilisation est faite d'un tampon (7) d'une forme telle que lors de l'impression sur une surface, la surface de contact entre le tampon (7) et la surface à imprimer augmente progressivement au fur et à mesure que le tampon (7) est pressé davantage.

4. Procédé suivant l'une quelconque des revendications 1 à 3, caractérisé en ce que utilisation est faite d'un tampon (7), avantageusement un tampon de silicone, ayant une dureté Shore A comprise entre 18 et 28.

5. Procédé suivant l'une quelconque des revendications 1 à 4, caractérisé en ce que utilisation est faite d'une encre comestible qui contient au moins un solvant, un pigment en suspension, un sucre et un agent tensioactif.

6. Procédé suivant la revendication 5, caractérisé en ce que utilisation est faite d'une encre comestible contenant 40 à 60 % en poids de pigment en suspension.

7. Procédé suivant l'une ou l'autre des revendications 5 et 6, caractérisé en ce que utilisation est faite d'une encre comestible qui contient au moins un pigment du groupe formé par le carbonate de calcium, le dioxyde de titane, l'oxyde de fer, l'hydroxyde de fer, l'aluminium, l'argent et l'or et qui contient avantageusement comme pigment en suspension principalement du dioxyde de titane.

7

8. Procédé suivant l'une quelconque des revendications 5 à 7, caractérisé en ce que utilisation est faite d'une encre comestible contenant de plus une substance lipophile, avantageusement du beurre de cacao, et un émulsifiant.

9. Procédé suivant l'une quelconque des revendications 5 à 8, caractérisé en ce que utilisation est faite d'une encre comestible contenant un polysorbate, avantageusement du monostéarate de polyoxyéthylène (20) sorbitane.

# Fig.1.

# Fig.2.